Europäisches Patentamt

European Patent Office

Office européen des brevets

(11) Numéro de publication : **0 426 560 B1**

# (12) FASCICULE DE BREVET EUROPEEN

(45) Date de publication du fascicule du brevet :
**24.08.94 Bulletin 94/34**

(51) Int. Cl.$^5$ : **H04L 27/18**

(21) Numéro de dépôt : **90403074.9**

(22) Date de dépôt : **30.10.90**

(54) **Procédé et dispositif de modulation numérique à composantes en phase et en quadrature.**

(30) Priorité : **02.11.89 FR 8914366**

(43) Date de publication de la demande :
**08.05.91 Bulletin 91/19**

(45) Mention de la délivrance du brevet :
**24.08.94 Bulletin 94/34**

(84) Etats contractants désignés :
**AT BE CH DE DK ES GB IT LI LU NL SE**

(56) Documents cités :
**GB-A- 1 570 840**
**1987 IEEE International Symposium on Circuits and Systems, Philadelphia, US, 4-7 mai, 1987; vol. 2, IEEE, New York, US pages 475 - 478; B. Ekelund et al.: "AVLSI sigma delta waveform generator for a quadrature type CPM transmitter"**

(73) Titulaire : **MATRA COMMUNICATION**
**50, rue du Président Sadate,**
**BP 32 - Creac'h Gwenn**
**F-29101 Quimper Cédex (FR)**

(72) Inventeur : **Alard, Michel**
**102 Avenue du Général Leclerc**
**F-75014 Paris (FR)**
Inventeur : **Dornstetter, Jean-Louis**
**7 Rue de L'Horloge**
**F-78150 Rocquencourt (FR)**

(74) Mandataire : **Fort, Jacques**
**CABINET PLASSERAUD**
**84, rue d'Amsterdam**
**F-75009 Paris (FR)**

EP 0 426 560 B1

## Description

L'invention a pour objet un procédé et un dispositif de modulation numérique de porteuse, sous une forme représentable par deux composantes, en phase I et en quadrature Q. L'invention trouve une application particulièrement importante, bien que non exclusive, constituée par la modulation à déplacement minimum et filtrage gaussien amont, couramment désignée par l'abréviation anglo-saxonne GMSK, proposée à l'heure actuelle pour la diffusion sonore vers des mobiles et la transmission vocale entre mobiles (radio-téléphone). On pourra trouver une description de la modulation GMSK dans divers documents, et notamment dans l'article de K. Murota "GMSK modulation for digital mobile radiotelephony", IEEE Transactions on Communications, Vol. Com. 29, No. 7, juillet 1981, pp. 1044-1050.

Classiquement, la modulation GMSK exige de mettre l'information à transmettre sous forme analogique, à l'aide de convertisseurs numérique-analogique (CNA). De tels convertisseurs sont également nécessaires pour d'autres types de modulation en phase et en quadrature, tels que la modulation dite "MAQ 4 phases". L'invention vise notamment à écarter la nécessité des convertisseurs classiques, qui constituent des composants de coût élevé difficilement intégrables, et en même temps à obtenir une pureté spectrale élevée du signal à transmettre, c'est-à-dire une densité de bruit faible en pied de porteuse, et un équilibre inhérent des voies I et Q.

L'invention fait avantageusement appel à la transformation de signal numérique par la conversion $\Sigma\Delta$ qui, jusqu'ici, n'a été utilisé qu'en bande de base. On pourra trouver des exemples de convertisseurs $\Sigma\Delta$ dans divers documents, notamment dans l'article de James Candy, "A use of double integration sigma-delta modulation", IEEE Transactions on Communications, Vol. Com. 33, No. 3, mars 1985, pp. 249-258.

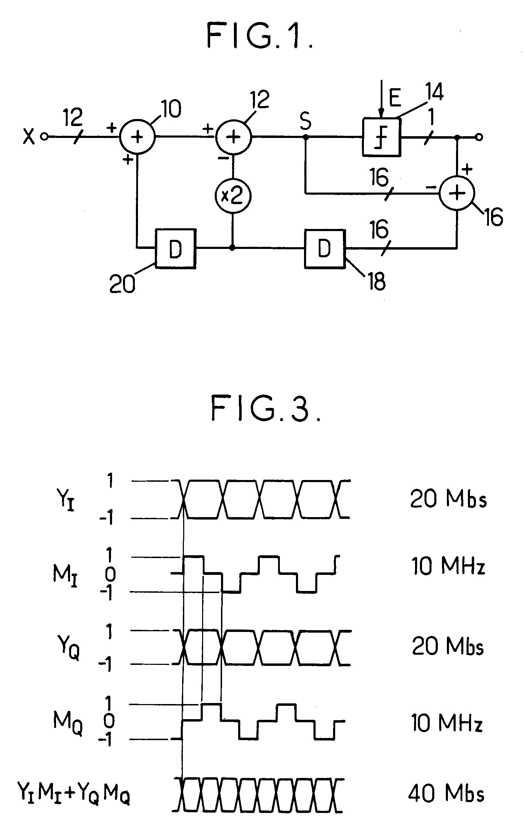

Pour faciliter l'exposé de l'invention, il peut être utile de rappeler quelle est la forme d'un convertisseur $\Sigma\Delta$ du second ordre, qui se prête à diverses variantes. Cette constitution est montrée en Figure 1.

Le signal de sortie binaire Y est obtenu à partir des échantillons successifs du signal d'entrée X par traitement dans un additionneur 10 appartenant à une boucle externe, un soustracteur 12 appartenant à une boucle interne et un circuit à seuil 14 de quantification fournissant, sur sa sortie, le signal binaire Y.

La quantification se traduit par l'addition d'une erreur de quantification E :

$$Y = S + E.$$

S étant le signal à l'entrée du circuit à seuil.

Le signal d'entrée S du quantificateur est soustrait du signal quantifié dans un soustracteur 16 dont la sortie traverse un élément 18 donnant un retard D égal à la période d'échantillonnage du signal d'entrée. Le signal retardé est appliqué à l'entrée soustractive de l'additionneur 12, après multiplication par 2, c'est-à-dire décalage d'un bit. Ce même signal, retardé d'une nouvelle durée D dans un élément de retard 20, est appliqué à l'entrée de l'additionneur 10.

Un tel convertisseur a une fonction de transfert :

$$H(z) = (1 - z^{-1})^2 \quad (1)$$

et le signal de sortie quantifié Y peut être représenté, en utilisant toujours les transformées en z, par :

$$Y(z) = X(z) + H(z).E(z)$$

Lorsque les échantillons sont numériques et se présentent à fréquence $1/T$ sous forme de mots successifs de m bits, les additionneurs 10 et 12 sont constitués par des accumulateurs de capacité suffisante pour ne pas risquer de débordement ; les éléments de retard 18 et 20 sont constitués par des registres ayant un nombre de bascules suffisant pour mémoriser la valeur maximale possible de l'erreur de quantification.

On connaît déjà (B. Ekelund et al : "A VLSI sigma delta waveform generator for a quadrature type CPM transmitter", 1987 IEEE Intern. Symposium on Circuits and Systems, Vol. 2, IEEE, New York, pp. 475-478) un générateur d'onde... pour un émetteur à modulation sur porteuses en quadrature. Le montage décrit est traditionnel : le signal est mis sous forme analogique et attaque deux porteuses analogiques en quadrature. Ce dispositif présente les défauts et limitations inhérents à un fonctionnement analogique. Il est très difficile de réaliser deux porteuses distinctes réellement en quadrature, de faire un mélangeur équilibré et plus généralement d'équilibrer les deux voies. Un circuit analogique se prête au surplus mal à une intégration.

Un procédé suivant un aspect de l'invention permettant d'écarter ces défauts est conforme à la revendication 1.

Un aspect particulier de l'invention est défini par la revendication 2 et utilise une conversion $\Sigma\Delta$ sur les deux composantes I et Q obtenues par modulation GMSK (ou plus généralement par modulation donnant naissance à de telles composantes) avant multiplexage de ces composantes et constitution de la porteuse.

Il faut rappeler ici qu'on utilise déja des convertisseurs $\Sigma\Delta$ pour effectuer la conversion analogique-numérique ou numérique-analogique ; avec un convertisseur du second ordre dont le filtre a un zéro double à la fréquence $v_0 = 0$, on minimise la puissance du bruit de quantification E dans l'ensemble de la bande du signal utile : la résolution du convertisseur est optimale.

Pour des raisons d'implémentation matérielle ou logicielle, il est nécessaire de tronquer temporellement l'enveloppe des composantes appliquées aux convertisseurs $\Sigma\Delta$, afin de réduire la taille des mémoires de représentation des formes d'onde. Dans la pratique, lorsqu'on utilise la modulation GMSK et un taux de sur-échantillonnage de 8, une troncature à une durée égale à quatre fois la période de bits donne généralement des résultats satisfaisants.

Souvent ce n'est pas une résolution élevée après modulation GMSK que l'on recherche, mais plutôt une bonne pureté spectrale du signal émis après modulation GMSK. Du fait de l'allure de la courbe de variation de la densité spectrale de puissance en fonction de la fréquence pour un signal GMSK, cette pureté est notablement améliorée si on utilise une conversion $\Sigma\Delta$ du second ordre modifiée pour avoir une fonction de transfert H(z) du genre :

$$H(z) = 1 - 2 \cos 2\pi\nu_0.z^{-1} + z^{-2} \quad (2)$$

qui a des zéros aux fréquences $+\nu_0$ et $-\nu_0$. La formule (2) se ramène au cas (1) ci-dessus si $\nu_0 = 0$.

Un choix approprié de la fréquence $\nu_0$ diminue la densité spectrale de puissance du bruit en pied de porteuse, à un point tel qu'elle va largement au-delà d'une simple compensation de la dégradation du rapport signal à bruit dans la bande utile du signal provoquée par le déplacement du zéro.

L'implémentation de la fonction de transfert (2) ci-dessus serait mal commode dans le cas général. Mais elle peut être rendue simple en synthétisant le facteur $\cos 2\pi\nu_0 T$ sous une forme polynomiale, telle que $1-(1/2)^n$ avec une valeur appropriée de n, qui dépend de la forme du spectre type du signal provenant de la modulation GMSK.

Une autre solution pour améliorer la pureté spectrale, cette fois en repoussant plus loin en fréquence l'énergie du bruit, consisterait à adopter un convertisseur $\Sigma\Delta$ d'ordre supérieur à 2.

L'invention propose également un dispositif de modulation numérique de porteuses par deux composantes en phase et en quadrature à partir d'échantillons numériques, comprenant un générateur GMSK dont les sorties en phase et en quadrature attaquent chacune une voie comprenant un générateur $\Sigma\Delta$ et un modulateur qui reçoit la porteuse à fréquence moitié de la fréquence des bits de sortie du convertisseur $\Sigma\Delta$, les deux voies attaquant un mélangeur.

L'invention sera mieux comprise à la lecture de la description qui suit de modes particuliers de réalisation, donnés à titre d'exemple non limitatif. La description se réfère aux dessins qui l'accompagnent, dans lesquels :

- la figure 1, déjà mentionnée, montre la constitution de principe d'un convertisseur $\Sigma\Delta$ du second ordre ;
- la figure 2 est un schéma de principe d'un modulateur numérique GMSK à conversion $\Sigma\Delta$, constituant un mode particulier de réalisation de l'invention ;
- la figure 3 est un diagramme montrant les formes d'onde qui apparaissent dans le schéma de la figure 2, aux emplacements désignés par la même référence que celle portée par les lignes de la figure 3 ;
- la figure 4 est un schéma montrant une constitution possible du mélangeur de la figure 2 ;
- la figure 5 montre l'allure des signaux à l'entrée et à la sortie du mélangeur de la figure 4 ;
- la figure 6 montre l'allure de la densité spectrale de puissance obtenue par mise en oeuvre d'un modulateur conforme aux schémas de principe des figures 1 et 2.

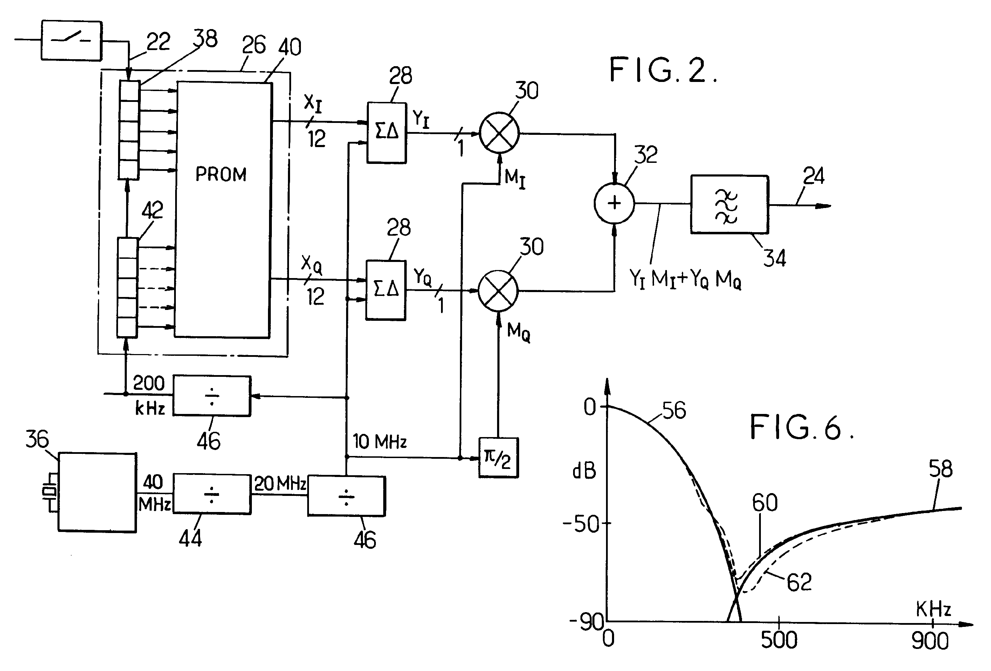

Le modulateur dont le schéma est montré en figure 2 est destiné à fournir, à partir d'un signal modulant binaire, appliqué sur son entrée 22, à fréquence de bits $f_b$, un signal GMSK de sortie 24.

Pour cela, le modulateur de la figure 2 comprend un générateur de signal GMSK 26 fournissant des formes d'onde de sortie $X_I$ et $X_Q$ sous forme d'échantillons numériques, codés chacun sur plusieurs bits et un bit de signe.

Les signaux de sortie $X_I$ et $X_Q$ du générateur 26 attaquent deux voies comportant chacune un convertisseur $\Sigma\Delta$ 28 du second ordre, pouvant avoir la constitution montrée en figure 1 et fournissant, pour chaque échantillon d'entrée $X_I$ ou $X_Q$, un seul bit de sortie $Y_I$ ou $Y_Q$. Chaque voie comporte également un modulateur 30 qui reçoit une porteuse à fréquence moitié de la fréquence des bits de sortie du convertisseur $\Sigma\Delta$. Les deux voies sont ensuite mélangées dans un mélangeur 32 et la porteuse modulée résultante est appliquée à un filtre 34 dont le rôle apparaîtra plus loin.

Les composants sont cadencés par des signaux provenant de diviseurs alimentés par une horloge de base 36 constituée par un oscillateur à quartz.

Les divers composants seront décrits successivement.

Le générateur GMSK 26 peut être constitué par un modulateur de fréquence d'indice 1/2 qui reçoit le signal modulant constitué par un signal binaire de débit $f_b$ et fournit deux signaux X de sortie codés sur 11 bits et 1 bit de signe. Le générateur 26 comporte un registre à décalage d'entrée 38 dont les sorties attaquent en parallèle une mémoire morte 40 donnant les formes d'onde en I et Q, sous forme des cosinus et sinus de la phase à des instants successifs $nT + mT_s$, où T est la période de bit, $T_s$ représente la période de sur-échantillonnage, $T_s = T/_r$ et m est un nombre entier compris entre 0 et r-1.

Le taux r de sur-échantillonnage constitue un compromis entre une valeur élevée de r, qui exigerait des mémoires de capacité importante, et une valeur faible, qui altèrerait le spectre de sortie.

A titre d'exemple on peut indiquer qu'un dispositif destiné aux communications vocales a été réalisé, dans lequel on a adopté un débit $f_b$ de 8 kbs, correspondant à une période de bit T = 125 $\mu$s. Dans ce cas un facteur r de sur-échantillonnage égal à 25 a donné des résultats satisfaisants pour l'obtention d'un signal GMSK à modulation de fréquence d'indice 1/2 utilisant un filtrage gaussien avec une fréquence de coupure B à 3 dB telle que BT = 0,25, avec une troncature de la gaussienne ne dépassant pas 5T.

Pour réaliser le sur-échantillonnage dans ce cas, la mémoire morte 40 est munie d'un compteur d'adressage 42 fonctionnant à la fréquence 25 $f_b$. Cette fréquence est fournie par l'horloge 36 à 40 MHz et deux diviseurs en cascade 44 ramenant la fréquence à 20 MHz et 46 fournissant la fréquence de 200 KHz. Le compteur 42 peut être constitué de cinq bascules en cascade ; sa sortie de retenue fournit la fréquence $f_b$ à l'entrée de décalage du registre 38 qui reçoit les bits arrivant sur l'entrée 22. La troncature s'effectuant sur cinq périodes, ce registre comporte cinq bascules en cascade.

Le sur-échantillonnage du signal modulé en bande de base se traduit par le présence, dans le spectre résultant, de spectres translatés à les fréquences multiples de r. $f_b$, qui apparaissent à l'entrée des convertisseurs $\Sigma\Delta$ et dont il est tenu compte dans le choix de la réponse impulsionnelle du filtre gaussien. A titre d'exemple, on peut indiquer que de bons résultats ont été obtenus dans le cas des caractéristiques ci-dessus avec une gaussienne limitée à l'intervalle (-2,5 T ; +2,5 T) à condition que la quasi-totalité de l'énergie de la gaussienne nominale soit reportée sur la gaussienne tronquée.

On ne décrira pas davantage le modulateur GMSK, car on pourra trouver des exemples de réalisation dans les documents mentionnés plus haut.

Chacun des convertisseurs $\Sigma\Delta$ 28 peut avoir la constitution de principe montrée en figure 1. L'échelle de quantification est choisie en gardant en mémoire que le signal entrant X ne doit pas dépasser les valeurs représentant les niveaux -1 et +1 en sortie sans risque de divergence. En conséquence, les valeurs représentant les niveaux -1 et +1 de Y sont prises égales à -2 048 et + 2 048 lorsque X est codé sur 11 bits et 1 bit de signe.

Les valeurs crête de X doivent être inférieures à 2 048 car :
- les valeurs trop proches de ± 2 048 induisent une densité de bits -1 ou de bits +1 trop proche de l'unité à la sortie du convertisseur 28 ;
- des valeurs trop faibles de la valeur crête augmentent le bruit de quantification.

Un compromis satisfaisant semble être d'adopter des valeurs de crête égales à ± 0,8 x 2 048.

Une étude de la configuration de la figure 1 montre que, à condition d'initialiser à 0 les registres 18 et 20, il suffit de coder l'information dans le convertisseur $\Sigma\Delta$ sur 15 bits et 1 bit de signe.

La fréquence de cadencement de chaque convertisseur $\Sigma\Delta$ 28 est liée au choix de la porteuse appliquée aux modulateurs 30. La porteuse doit pouvoir recevoir 1 bit provenant de chaque voie à chacune de ses demi périodes. Chaque convertisseur $\Sigma\Delta$ est alors cadencé à 20 MHz par le diviseur 44 si la porteuse est à 10 MHz.

La modulation de la fréquence porteuse dans le schéma de la figure 2 peut être considérée comme de type pseudo-analogique. Chaque modulateur $\Sigma\Delta$ 28 attaque l'entrée d'un multiplieur 30 qui reçoit également une onde ternaire $M_I$ ou $M_Q$ à la fréquence fondamentale de 10 MHz, les deux ondes étant en quadrature. Le modulateur montré en figure 1 comporte pour cela un générateur 46 qui attaque directement le multiplieur 30 de la voie I et attaque le multiplieur 30 de la voie Q par un déphaseur 48.

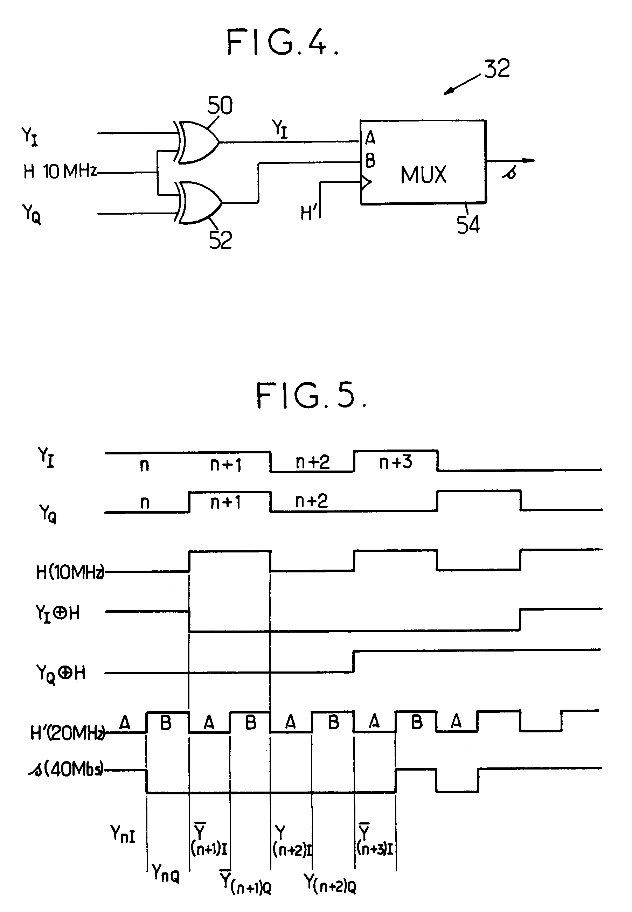

Les formes d'onde à l'entrée des multiplieurs 30 apparaissent sur la figure 3.

Le signal GMSK obtenu par sommation des sorties des multiplieurs 30 est constitué par un train NRZ à 40 Mbs, échantillonné à 20 MHz. Le sommateur 32 peut être réalisé de façon simple sous forme de deux portes OU EXCLUSIF 50 et 52 et d'un multiplexeur 54 (figure 4). La figure 5 montre un exemple de mise en forme. La séquence de sortie s est du type $Y_{nI}$ ; $Y_{nQ}$ ; $Y_{(n+1)I}$ ; $Y_{(n+1)Q}$ ; $Y_{(n+2)I}$ ; etc.

Chaque convertisseur 28 peut être réalisé, dans le cas où le nombre de bits de codage est celui donné plus haut, sous forme d'un additionneur 10 à 16 bits, de deux soustracteurs 12 et 16 à 16 bits et de trois registres à 16 bits constituant les éléments de retard 18 et 20 et le multiplieur par deux.

Enfin, le modulateur de la figure 2 comporte un filtre-passe bande 34 de sortie, dont la fréquence centrale est celle de la fréquence porteuse, c'est-à-dire 10 MHz, et dont le rôle est d'éliminer les composantes spectrales dues au bruit de quantification (2 fois la largeur à 3 dB).

Un autre mode de réalisation de l'invention est directement applicable aux caractéristiques du système PAN EUROPEEN de radio-téléphone. Ce système prévoit une fréquence de bits $f_b$ égale à (13/48) MHz, avec un espacement des canaux de 200 KHz. On a envisagé, pour ce système, une installation à modulation GMSK comportant des convertisseurs numériques analogiques dont les inconvénients ont été signalés plus haut. Le signal modulant est constitué par des salves normales de 148 bits ou des salves courtes, qui peuvent être complétées par des 1 de façon à se ramener au premier cas.

On peut encore adopter un générateur GMSK du type montré en figure 2, mais avec un taux de sur-échantillonnage de 8 et une troncature à 4T, associé à des convertisseurs $\Sigma\Delta$ modifiés pour améliorer la pureté spectrale du signal émis, afin de tenir compte de ce que le taux de sur-échantillonnage est beaucoup moins élevé que dans le cas précédent.

Pour mieux définir le générateur GMSK à utiliser, il peut être utile de rappeler l'enveloppe complexe correspondant à la modulation MSK en général. Le signal de sortie X(t) obtenu par cette modulation peut être représenté par :

$$X(t) = \exp[i(\pi/2) \Sigma \alpha_n.q(t - nT)] \quad (3)$$

où T est la période de bit, et

$$q(t) = \int_{-\infty}^{t} g(t).dt$$

avec

$$g(t) = \begin{cases} 1/T \text{ pour } 0 \leqslant t \leqslant T \\ \text{nul ailleurs.} \end{cases}$$

La modulation GMSK se différencie de la modulation MSK type en ce que $q(t)$ est généré par une fonction $g^*(t)$ de la forme :

$$g^*(t) = h(t).g(t) \quad (4)$$

où $h(t) = [\sqrt{2} \, \delta T]^{-1} . \exp(-t^2/2\delta^2 T^2)$

avec $\delta = \sqrt{\ell n(2)}/2\Pi \, BT$

$BT = 0,3$ dans le cas du système pan-européen.

Comme on l'a vu plus haut, des raisons d'implémentation pratique obligent à tronquer la fonction $q(t)$. Une troncature à une durée de 4T suffit à garantir une pureté spectrale satisfaisante. Pour cela, on peut tronquer la gaussienne à 3T, tronquer directement $q(t)$ ou tronquer $g(t)$ à 4T avant intégration.

La dernière méthode semble avantageuse. Elle modifie l'intégrale de $g^*(t)$ qui n'est plus strictement égale à 1, ce qui oblige à renormaliser $q(t)$. Cela ne soulève pas de difficulté.

Comme dans le cas du modulateur de la figure 2, X peut être représenté par un mot de 11 bits et 1 bit de signe, représentant des valeurs comprises entre +1 640 et -1 640. Mais, étant donné que les bits modulants se présentent sous forme de salves, il est nécessaire de donner aux signaux de sortie une enveloppe dont le niveau est constant sur tous les bits utiles, mais qui est prolongée par une rampe de montée et une rampe de descente, correspondant par exemple chacune à trois périodes de bit. Le taux de suréchantillonnage étant de 8, les échantillons de sortie $X_I$ et $X_Q$ apparaissent avec une fréquence de bits de 26 MHz.

Chacun des convertisseurs $\Sigma\Delta$ peut avoir la constitution montrée en figure 1, si ce n'est que le multiplieur est prévu pour que la fonction de transfert $H(z)$ soit :

$$H(z) = 1 - [2 - (1/2)^7]z^{-1} + z^{-2} \quad (2bis)$$

Cette fonction simule la formule (2) et correspond approximativement à $\nu_0 = 365,9$ MHz. Pour implémenter la formule (2 bis) le multiplieur est prévu pour réaliser une multiplication par 2 (sous forme d'un simple décalage), une multiplication par $2^{-7}$ (décalage de 7 bits) et une soustraction.

L'effet de la modification du convertisseur apparaît sur la figure 6 qui montre, en traits pleins, la densité spectrale de puissance du signal utile (courbe 56) et celle du bruit $\Sigma\Delta$ et d'échantillonnage (courbe 58) dans le cas d'un spectre GMSK avec $BT = 0,3$ et d'un

convertisseur $\Sigma\Delta$ d'ordre 2. La courbe résultante 60 est modifiée et prend la forme 62 lorsque les convertisseurs $\Sigma\Delta$ répondent à la formule (2 bis) avec $\nu_0 = 365,9$ MHz : on voit que l'énergie du bruit est reportée vers les fréquences plus élevées.

La formule (2bis) introduit, par rapport à une division par 128, un bruit de quantification et un biais de -0,5 mais ils n'ont pas d'effet sensible.

La modulation de la fréquence porteuse peut être effectuée comme dans le cas de la figure 2, si ce n'est que les trains $Y_I$ et $Y_Q$ à 26 Mbs/s sont transformés en un train unique NRZ à 52 Mbs/s.

Comme on l'a indiqué plus haut, l'invention n'est pas limitée au seul cas de la modulation GMSK. Elle peut en particulier être appliquée à toutes les modulations à phase continue à réponse entière ou à réponse partielle. Quel que soit le mode de réalisation adopté un équilibrage parfait irréalisable avec des convertisseurs qui ne peuvent être absolument identiques est obtenu du fait de la symétrie de la porteuse.

## Revendications

1. Procédé de modulation de porteuse par deux composantes en phase et en quadrature à partir de signaux numériques,
   caractérisé en ce qu'on constitue les composantes de modulation en phase et en quadrature par deux séquences d'éléments binaires à fréquence déterminée et en ce qu'on applique lesdites séquences d'éléments binaires à une porteuse à trois niveaux +1, 0 et -1, symétrique, à fréquence moitié de la fréquence des éléments binaires.

2. Procédé selon la revendication 1,
   caractérisé en ce que, par application des deux séquences à deux composantes en quadrature de la dite porteuse et addition des composantes ternaires en quadrature modulées par les séquences, on inverse un élément sur deux de chaque séquence et on réalise un multiplexage temporel donnant naissance à une porteuse à modulation numérique à fréquence de modulation double de la fréquence de chaque séquence.

3. Procédé selon la revendication 1 ou 2,
   caractérisé en ce que les dites séquences d'éléments binaires sont obtenues par conversion $\Sigma\Delta$ de deux trains de signaux numériques en quadrature obtenus à partir d'échantillons d'un signal modulant d'entrée.

4. Procédé selon la revendication 3,
   caractérisé en ce que la conversion $\Sigma\Delta$ est effectuée avec une fonction de transfert $H(z)$ simulant :

$$H(z) = 1 - 2 \cos (2\pi v_0). \, z^{-1} + z^{-2}$$

$v_0$ étant une fréquence choisie pour diminuer la densité spectrale de puissance du bruit en pied de porteuse.

5. Procédé selon la revendication 3,
caractérisé en ce que la conversion $\Sigma\Delta$ est effectuée avec une fonction de transfert H(z)
$$H(z) = 1 - [2 - (2)^{-n}]z^{-1} + z^2$$
avec $7 < n < 9$.

6. Procédé selon l'une quelconque des revendications 1 à 5,
caractérisé en ce que les composantes sont créées par modulation GMSK à partir d'un signal modulant d'entrée, puis transformation en séquences d'éléments binaires.

7. Procédé selon la revendication 6,
caractérisé en ce que, la fréquence de bits en sortie de modulation GMSK étant de 26 MHz, $v_0$ est choisie égale à 365,9 MHz.

8. Procédé selon la revendication 5, caractérisé en ce que les composantes, obtenues par modulation GMSK, sont sur-échantillonnées à huit fois la fréquence bit du signal d'entrée.

9. Utilisation du procédé selon l'une quelconque des revendications précédentes dans un système de radiotéléphonie mobile.

10. Dispositif de modulation numérique de porteuse par deux composantes en phase et en quadrature à partir d'échantillons numériques, caractérisé en qu'il comprend un générateur GMSK dont les sorties en phase et en quadrature attaquent chacune une voie comprenant un générateur $\Sigma\Delta$ (28) et un modulateur (30) qui reçoit la porteuse à fréquence moitié de la fréquence des bits de sortie du convertisseur $\Sigma\Delta$, les deux voies, dont les porteuses sont en quadrature, attaquant un mélangeur (32).

## Patentansprüche

1. Verfahren zur Trägermodulation durch zwei Inphase- und Quadraturkomponenten auf der Basis von Digitalsignalen, **dadurch gekennzeichnet,** daß die Inphase- und Quadraturkomponenten durch zwei Binärelementsequenzen von bestimmter Frequenz gebildet werden und daß die besagten Binärelementsequenzen auf einen Träger symetrisch mit drei Niveaus +1, 0 und -1 bei einer Frequenz von der Hälfte der Frequenz der Binärelementsequenz angewendet werden.

2. Verfahren nach Anspruch 1, **dadurch gekennzeichnet,** daß durch die Anwendung der zwei Sequenzen auf zwei Quadraturkomponenten des Tägers und Addition der dreigliedrigen Quadraturkomponenten, die durch die Sequenzen moduliert sind, jeweils ein Element von zwei jeder Sequenz invertiert wird und eine temporäre Multiplexierung durchgeführt wird, wodurch ein digitalmodulierter Träger mit einer Modulationsfrequenz vom Zweifachen der Frequenz jeder Sequenz erzeugt wird.

3. Verfahren nach Anspruch 1 oder 2, **dadurch gekennzeichnet,** daß die Binärelementsequenzen erzeugt werden durch Konversion $\Sigma\Delta$ von zwei Zügen von Quadraturdigitalsignalen, die auf der Basis der Abtastungen eines modulierenden Eingangssignals erhalten werden.

4. Verfahren nach Anspruch 3, **dadurch gekennzeichnet,** daß die Konversion $\Sigma\Delta$ mit einer Transformationsfunktion H(z) durchgeführt wird, die simuliert:
$$H(z) = 1 - 2 \cos (2\pi v_0). \, z^{-1} + z^{-2}$$
wobei $v_0$ eine Frequenz ist, die gewählt wurde, um die spektrale Dichte der Rauschleistung auf dem Grunde des Trägers zu vermindern.

5. Verfahren nach Anspruch 3, **dadurch gekennzeichnet,** daß die Konversion $\Sigma\Delta$ mit einer Tansformationsfunktion H(z) durchgeführt wird
$$H(z) = 1 - [2 - (2)^{-n}] \, z^{-1} + z^2$$
mit $7 < n < 9$.

6. Verfahren nach einem der vorangegangenen Ansprüche 1 bis 5, **dadurch gekennzeichnet,** daß die Komponenten durch GMSK-Modulation auf der Grundlage eines modulierenden Eingangssignals erzeugt werden, und dann in Binärelementsequenzen transformiert werden.

7. Verfahren nach Anspruch 6, **dadurch gekennzeichnet,** daß die Frequenz der Bits am Ausgang der GMSK-Modulation gleich 26 MHz ist und $v_0 = 365,9$ MHz gewählt ist.

8. Verfahren nach Anspruch 5, **dadurch gekennzeichnet,** daß die Komponenten, welche durch GMSK-Modulation erhalten wurden, mit dem 8-fachen der Bitfrequenz des Eingangssignals überabgetastet sind.

9. Verwendung des Verfahrens nach einem der vorangegangenen Ansprüche in einem mobilen Radio-Telefon-System.

10. Vorrichtung zur Digitalmodulation mittels zweier In phase- und Quadraturkomponenten auf der Grundlage digitaler Abtastung, **dadurch gekennzeichnet**, daß sie einen Generator GMSK umfaßt, dessen Inphase- und Quadraturausgänge jeweils a einem Kanal anliegen, der einen Generator $\Sigma\Delta$ (28) und einen Modulator (30) umfaßt, welcher den Träger mit der halben Frequenz der Bitfrequenz des Ausgangs des Konverters $\Sigma\Delta$ aufnimmt, wobei die beiden Kanäle, deren Träger in Quadratur sind, an einem Mischer (32) anliegen.

**Claims**

1. A method of modulating a carrier wave by two components, in-phase and in-quadrature, starting from digital signals, characterized in that the modulation components, in-phase and in-quadrature, are formed by two sequences of binary elements of pre-determined frequency, and said sequences of binary elements are applied to a symmetrical carrier wave having three levels +1, 0 and -1, at half the frequency of the frequency of the binary elements.

2. A method according to Claim 1, characterized in that a time multiplexing is obtained which produces a digitally modulated carrier wave with a modulation frequency twice the frequency of each sequence, by the application of the two sequences of two components of said carrier wave in-quadrature and the addition of the ternary components in-quadrature modulated by the sequences, alternate elements of each sequence being inverted.

3. A method according to Claim 1 or 2, characterized in that said sequences of binary elements are obtained by the $\Sigma\Delta$ conversion of two trains of digital signals, in-quadrature, obtained from samples of a modulating input signal.

4. A method according to Claim 3, characterized in that the $\Sigma\Delta$ conversion is performed with a transfer function H(z) simulating:
$$H(z) = 1 - 2\cos(2\pi\nu_O).z^{-1} + z^{-2}$$
where $\nu_O$ is a frequency selected to reduce the spectral power density of the noise at the base of the carrier wave.

5. A method according to Claim 3, characterized in that the $\Sigma\Delta$ conversion is performed with a transfer function H(z)
$$H(z) = 1 - [2 - (2)^{-n}]z^{-1} + z^{2}$$
where $7 < n < 9$.

6. A method according to any of Claims 1 to 5, characterized in that the components are created by GMSK modulation from a modulating input signal, followed by conversion into sequences of binary elements.

7. A method according to Claim 6, characterized in that the frequency of bits at the GMSK modulation output being 26 MHz, $\nu_O$ is selected equal to 365.9 MHz.

8. A method according to Claim 5 characterized in that the components obtained by GMSK modulation are oversampled at eight times the bit frequency of the input signal.

9. Use of the method according to any of the preceding Claims in a mobile radiotelephony system.

10. An apparatus for the digital modulation of a carrier wave by two components, in-phase and in-quadrature, from digital samples, characterized in that it comprises a GMSK generator whose outputs, in-phase and in-quadrature, are each applied to a path comprising a $\Sigma\Delta$ generator (28) and a modulator (30) which receives the carrier wave having half the frequency of the frequency of the output bits of the $\Sigma\Delta$ converter, the two paths whose carrier waves are in quadrature, being applied to a mixer (32).

# FIG.1.

# FIG.3.

FIG.2.

FIG.6.

EP 0 426 560 B1

EP 0 426 560 B1

# FIG.4.

# FIG.5.

10